# EUROPÄISCHE PATENTSCHRIFT

(11) **EP 1 889 667 B1**
(45) Veröffentlichungstag und Bekanntmachung des Hinweises auf die Patenterteilung: **14.01.2009**
(21) Anmeldenummer: 07022331.8
(22) Anmeldetag: 17.03.2006
(51) Int. Cl.: B05B 13/04, B05B 15/12

(54) **Beschichtungsanlage und zugehöriges Verfahren**
Coating facility and corresponding method
Installation de revêtement et procédé correspondant

(30) Priorität: 21.03.2005 DE 102005013014
(43) Veröffentlichungstag der Anmeldung: 20.02.2008
(62) Teilanmeldung aus: 06111359.3
(73) Patentinhaber: Dürr Systems GmbH, 70435 Stuttgart (DE)
(72) Erfinder: Herre, Frank, 71739 Oberriexingen (DE)
(74) Vertreter: Beier, Ralph

(56) Entgegenhaltungen:
- WO-A-20/04037430
- DE-A1- 10 337 803
- FR-A- 2 405 758
- US-A- 5 042 420
- US-A1- 2005 051 085

## Beschreibung

Die Erfindung betrifft eine Beschichtungsanlage und ein entsprechendes Montage- bzw. Betriebsverfahren gemäß dem Oberbegriff der nebengeordneten Ansprüche.

Aus WO 2004/037430 A1 ist eine Beschichtungsanlage bekannt, bei der in einer Lackierzelle ein Rahmen angeordnet ist, der an seinen Längsseiten mehrere Lackierroboter trägt, wobei der gesamte Rahmen mit den Lackierrobotern durch Standbeine gegenüber dem Fundament der Lackierzelle nach oben versetzt ist. Diese nach oben versetzte Montage der Lackierroboter ist im Vergleich zu bodenmontierten Lackierrobotern wartungsärmer und weniger verschmutzungsanfällig, da das sogenannte Overspray in der Lackierzelle nach unten absinkt und deshalb bodenmontierte Lackierroboter schneller und stärker verschmutzt.

Nachteilig an dieser bekannten Beschichtungsanlage gemäß WO 2004/037430 A1 ist jedoch die Tatsache, dass zur angehobenen Montage der Lackierroboter eine zusätzliche Rahmenstruktur mit Standbeinen in der Lackierzelle angeordnet werden muss.

Darüber hinaus sind herkömmliche Lackierroboter konstruktiv darauf ausgerichtet, dass der Arbeitsraum oberhalb der Montageebene liegt, wohingegen die Beschichtungsanlage gemäß WO 2004/037430 A1 Lackierroboter erfordert, deren Arbeitsraum unterhalb ihrer Montageebene liegt.

Aus DE 103 37 803 A1, Entgegenhaltung, die als nächstliegender Stand der Technik betrachtet wird und alle Merkmale des Oberbegriffs von Anspruch 1 offenbart, US 2005 /051085 A1, US 5 042 420 und FR 2 405 758 sind verschiedene Vorrichtungen und Verfahren aus dem Gebiet der Lackiertechnik bekannt. Keine dieser Entgegenhaltungen offenbart jedoch eine Lackierzelle, bei der ein Applikationsroboter in einer waagerecht verlaufenden Decke einer Lackierzelle hängend montiert ist.

Der Erfindung liegt deshalb die Aufgabe zugrunde, diese bekannte Beschichtungsanlage entsprechend zu verbessern.

Diese Aufgabe wird durch die nebengeordneten Ansprüche gelöst.

Die Erfindung umfasst die allgemeine technische Lehre, den Applikationsroboter mindestens teilweise hängend zu montieren, so dass herkömmliche Lackierroboter verwendet werden können, deren Arbeitsraum bei einer stehenden Montage oberhalb der Montageebene und bei einer hängenden Montage unterhalb der Montageebene liegt.

Der im Rahmen der Erfindung verwendete Begriff einer hängenden Montage des Applikationsroboters bedeutet vorzugsweise, dass die Basis des Applikationsroboters gegenüber einer herkömmlichen stehenden Bodenmontage auf einem waagerechten Fundament um einen Winkel geneigt ist, der größer als 90°, 100° oder sogar 110° ist und im Falle einer Überkopf-Montage bis zu 180° betragen kann, wobei beliebige Zwischenwerte möglich sind.

Darüber hinaus bedeutet der Begriff einer hängenden Montage des Applikationsroboters vorzugsweise, dass der Arbeitsbereich des Applikationsroboters mehrheitlich oder sogar vollständig unterhalb der Montageebene liegt, wie bereits vorstehend angedeutet wurde. Der Arbeitsbereich des Applikationsroboters ist hierbei der räumliche Bereich innerhalb der Lackierzelle, der von dem Applikationsroboter für eine Beschichtung eines Applikationsobjekts (z.B. eine Kraftfahrzeugkarosserie) erreicht werden kann. Die Montageebene in diesem Sinne ist dagegen die Ebene bzw. die Höhe in der Lackierzelle, in der die Basis des Applikationsroboters am Fundament oder einer Tragstruktur befestigt ist.

Die hängende Montage des Applikationsroboters bietet zum einen den bereits vorstehend erwähnten Vorteil, dass der Applikationsroboter aufgrund seiner Montageposition im oberen Bereich der Lackierzelle weniger stark verschmutzt, wodurch der Aufwand für Wartung und Reinigung des Applikationsroboters verringert wird.

Zum anderen ist die erfindungsgemäße Anordnung des Applikationsroboters im oberen Bereich der Lackierzelle strömungstechnisch günstiger, was zu einer Erhöhung des Auftragswirkungsgrads und zu einer Verringerung des sogenannten Oversprays beiträgt.

Darüber hinaus ermöglicht die hängende Montage des Applikationsroboters eine Verringerung der Anzahl von Applikationsrobotern in den einzelnen Lackierzellen. So besteht bei einer hängenden Montage des Applikationsroboters die Möglichkeit, dass in einer Lackierzelle nur ein einziger Applikationsroboter angeordnet ist, der die Applikationsobjekte (z.B. Kraftfahrzeugkarosserien) aufgrund der erfindungsgemäßen Montage von allen Seiten beschichten kann. Eine derartige Verringerung der Anzahl von Applikationsrobotern in den einzelnen Lackierzellen ermöglicht eine erhebliche Senkung der Kosten (z.B. für Bauteile, Instandhaltung, Lack, Spülmittel, etc.).

Ferner bietet die erfindungsgemäße hängende Montage des Applikationsroboters den Vorteil, dass eine geringere Kabinenbereite möglich ist, wobei der Arbeitsraum besser genutzt wird.

Weiterhin ermöglicht die Erfindung vorteilhafterweise den Einsatz von Applikationsrobotern mit einer geringeren Zahl von beweglichen Achsen.

Besonders vorteilhaft ist es, wenn der Applikationsroboter in der Lackierzelle so angeordnet ist, dass sich das zu beschichtende Applikationsobjekt im Wesentlichen in der Mitte des Arbeitsbereichs des Applikationsroboters befindet und/oder vollständig innerhalb des Arbeitsbereichs des Applikationsroboters liegt.

Gemäß der Erfindung ist der Applikationsroboter in einer im Wesentlichen waagerecht verlaufenden Decke einer Lackierzelle hängend montiert. Diese Überkopf-Montage des Applikationsroboters ermöglicht eine Beschichtung der in der Lackierzelle befindlichen Applikationsobjekte (z.B. Kraftfahrzeugkarosserien) auf beiden Seiten, so dass in jeder Lackierzelle ein einziger Applikationsroboter ausreicht, wie bereits vorstehend erwähnt wurde. Die Decke der Lackierzelle ist hierbei als Filterdecke ausgebildet, durch die hindurch ein Luftstrom nach unten in die Lackierzelle geleitet wird, was an sich bekannt ist.

Die Seitenwand der Lackierzelle kann hierbei gegenüber der Senkrechten um einen Neigungswinkel geneigt sein, der beispielsweise zwischen 5° und 40° beträgt, wobei beliebige Zwischenwerte innerhalb dieses Wertebereichs möglich sind.

Die Lackierzelle hat in dieser Variante der Erfindung also einen Querschnitt, der sich nach oben hin verjüngt, was sich als strömungstechnisch günstig erwiesen hat und zu einer Erhöhung des Auftragswirkungsgrads und zu einer Verringerung des sogenannten Oversprays beträgt.

Bei der Überkopf-Montage kann die Decke der Lackierzelle selbst eine Tragstruktur bilden, die den Applikationsroboter trägt, was jedoch eine entsprechende mechanische Verstärkung der Decke der Lackierzelle erfordert.

Es ist deshalb alternativ möglich, außerhalb der Lackierzelle eine Tragstruktur anzuordnen, die den Applikationsroboter trägt, während die Decke der Lackierzelle nicht-tragend ist, wobei sich in der Decke der Lackierzelle ein Durchbruch befindet, durch den der Applikationsroboter in die Lackierzelle hineinragt. Die Decke der Lackierzelle hat hierbei also nur die Funktion, die Lackierzelle möglichst glattflächig zu begrenzen, was insbesondere bei dem sogenannten "Clean Wall Concept" wichtig ist. Die außen liegende Tragstruktur hat dagegen hierbei die alleinige Aufgabe, den Applikationsroboter zu halten. Diese Fünktionstrennung ermöglicht eine optimale konstruktive Auslegung der Decke der Lackierzelle einerseits und der Tragstruktur andererseits auf ihre jeweilige technische Funktion hin.

Weiterhin weist die erfindungsgemäße Beschichtungsanlage vorzugsweise einen Verfahrweg auf, entlang dem der Applikationsroboter verfahrbar ist. Dies ermöglicht vorteilhaft eine Vergrößerung des Arbeitsraums des Applikationsroboters, indem der Applikationsroboter entlang dem Verfahrweg entsprechend positioniert wird.

In einer Variante der Erfindung ist der Verfahrweg ringförmig geschlossen, wobei der Verfahrweg beispielsweise kreisförmig, ovalförmig oder rechteckig sein kann. Ein derartig geformter Verfahrweg ermöglicht eine erhebliche Erweiterung des Arbeitsraums des Applikationsroboters, wobei sogar eine unidirektionale Bewegung des Applikationsroboters ausreicht.

In einer anderen Variante verläuft der Verfahrweg dagegen parallel zu dem Applikationsobjekt bzw. entlang einer Lackierstrasse, die durch die Beschichtungsanlage hindurch verläuft. Weiterhin kann der Verfahren auch quer, vorzugsweise rechtwinklig, zu dem Applikationsobjekt bzw. der Lackierstrasse verlaufen. Ferner besteht auch die Möglichkeit, dass der Verfahrweg sich in einen quer verlaufenden und einen längs verlaufenden Zweig gabelt. Weiterhin können auch mehrere Verfahrwege vorgesehen sein, zwischen denen der Applikationsroboter wechseln kann.

Hierbei ist es wünschenswert, dass die Luftströmung in dem Lackierbereich innerhalb der Lackierzelle durch den Verfahrweg möglichst wenig beeinflusst wird. Vorzugsweise ist der Verfahrweg deshalb außerhalb des Lackierbereichs angeordnet. Dies wird vorzugsweise dadurch erreicht, dass sich der Verfahrweg für den Applikationsroboter oberhalb des Lackierbereichs befindet. Bei einer Anordnung des Verfahrwegs senkrecht über dem Applikationsobjekt (z.B. einer Kraftfahrzeugkarosserie) sollte der Verfahrweg also außerhalb des Lackierbereichs liegen.

Weiterhin besteht im Rahmen der Erfindung die Möglichkeit, dass entlang dem Verfahrweg mehrere Applikationsroboter verfahrbar sind, so dass sich beispielsweise zwei Applikationsroboter denselben Verfahrweg teilen.

Darüber kann auf dem Verfahrenweg zusätzlich zu dem Applikationsroboter mindestens ein Handhabungsroboter verfahrbar sein, so dass sich der Applikationsroboter und der Handhabungsroboter denselben Verfahrweg teilen. Der Handhabungsroboter kann hierbei beispielsweise dazu dienen, Türen, Motorhauben oder Kofferraumdeckel der zu beschichtenden Kraftfahrzeugkarosserien zu öffnen, um eine Beschichtung im Innenraum der Kraftfahrzeugkarosserie zu ermöglichen.

Bei einer solchen Anordnung mehrerer Roboter (Applikationsroboter und/oder Handhabungsroboter) auf einem gemeinsamen Verfahrweg kann eine Notstrategie bzw. ein Ausfallkonzept realisiert werden, um auch bei einem Ausfall eines der Roboter noch die Funktionsfähigkeit sicher zu stellen. Dies wird vorzugsweise dadurch erreicht, dass die einzelnen Roboter auf dem Verfahrweg einander wechselseitig passieren können, damit ein Ausfall einer Roboters den Bewegungsspielraum der anderen Roboter und damit deren Funktionsfähigkeit nicht unnötig einschränkt.

In einem bevorzugten Ausführungsbeispiel der Erfindung weist der Verfahrweg eine Schiene auf, die den Applikationsroboter in seitlicher Richtung bezüglich der Schiene führt und in vertikaler Richtung hält.

In einem anderen Ausführungsbeispiel der Erfindung ist der Applikationsroboter dagegen ortsfest innerhalb der Lackierzelle montiert. Dies ist insbesondere dann sinnvoll, wenn der Applikationsroboter in einer geneigten, schrägen Seitenwand der Lackierzelle hängend montiert ist, wie bereits vorstehend beschrieben wurde.

Ferner ist zu erwähnen, dass die Lackierzelle bei der erfindungsgemäßen Beschichtungsanlage vorzugsweise eine nach innen gewölbte Decke aufweist, was sich als strömungstechnisch günstig erwiesen hat und ebenfalls zu einer Erhöhung des Auftragswirkungsgrads und zu einer Verringerung des sogenannten Oversprays beiträgt.

Weiterhin ist es sinnvoll, wenn der Applikationsroboter zumindest in einer möglichen Position im Wesentlichen mittig über dem Applikationsobjekt angeordnet ist, damit der Applikationsroboter das Applikationsobjekt beidseitig beschichten kann, so dass in jeder Lackierzelle ein einziger Applikationsroboter ausreicht.

Ferner ist es vorteilhaft, wenn die Lackierzelle Seitenwände aufweist, die zumindest teilweise durchsichtig sind. Zum einen ermöglicht dies eine Sichtkontrolle des Lackierprozesses von außen. Zum anderen sind Seitenwände aus Glas elektrisch nicht-leitend, was bei einer elektrostatischen Lackierung vorteilhaft ist.

Darüber hinaus umfasst die Erfindung auch ein entsprechendes Verfahren zur Montage und/oder zum Betrieb eines mehrachsigen Applikationsroboters in einer Beschichtungsanlage, bei dem der Applikationsroboter mindestens teilweise hängend montiert und/oder betrieben wird.

Der im Rahmen der Erfindung verwendete Begriff eines Applikationsroboters umfasst vorzugsweise mehrachsige Applikationroboter mit beispielsweise 4, 5, 6 oder 7 Achsen, die vorzugsweise eine herkömmliche Roboterhandachse aufweisen.

Darüber hinaus kann der Applikationsroboter einen im Wesentlichen horizontal verlaufenden Tragarm aufweisen, der um eine im Wesentlichen senkrechte Schwenkachse schwenkbar ist, wobei der Applikationsroboter vorzugsweise acht bewegliche Achsen aufweist. Ein derartiger Applikationsroboter ist von der Firma Dürr Systems GmbH erhältlich und wird unter der Marke E-coRP Swing^{™} vertrieben.

Ferner ist die Erfindung hinsichtlich des zu applizierenden Beschichtungsmittels nicht auf Flüssig oder Pulverlacke beschränkt, sondern auch mit anderen Beschichtungsmitteln realisierbar.

Vorzugsweise trägt der Applikationsroboter jedoch einen Zerstäuber, wie beispielsweise einen Rotationszerstäuber, der vorzugsweise eine elektrostatische Aufladung aufweisen kann.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Fig. 1A-1C: verschiedene Ansichten einer Lackierzelle einer erfindungsgemäßen Beschichtungsanlage,
- Fig. 2A, 2B: verschiedene Ansichten eines abgewandelten Ausführungsbeispiels einer derartigen Lackierzelle.

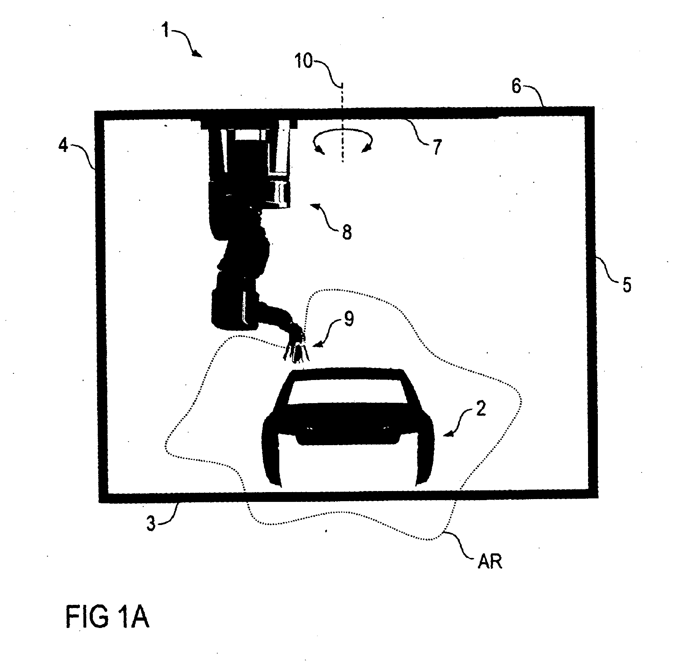

Die Zeichnungen in den Figuren 1A-1C zeigen ein erstes Ausführungsbeispiel einer Lackierzelle 1 in einer erfindungsgemäßen Beschichtungsanlage zur Lackierung von Kraftfahrzeugkarosserien, wobei in den Zeichnungen nur eine einzige Kraftfahrzeugkarosserie 2 dargestellt ist.

Darüber hinaus sind in der Beschichtungsanlage vor und hinter der dargestellten Lackierzelle 1 weitere Lackierzellen angeordnet, was jedoch von herkömmlichen Beschichtungsanlagen bekannt ist und deshalb nicht weiter beschrieben wird.

Die Lackierzelle 1 weist einen Boden 3, Seitenwände 4, 5 und eine als Filterdecke ausgebildete Decke 6 auf, die entsprechend dem sogenannten "Clean Wall Concept" an ihrer Innenseite möglichst glattflächig ausgebildet sind, um die Anhaftung von Beschichtungsmittelresten zu erschweren und die Reinigung zu erleichtern.

An der Decke 6 der Lackierzelle 1 befindet sich eine Schienenanordnung 7, an der ein Lackierroboter 8 über Kopf hängend montiert ist, wobei der Lackierroboter 8 einen Rotationszerstäuber 9 mit einer elektrostatischen Außenauflage führt.

Der Lackierroboter 8 und der Rotationszerstäuber 9 sind jeweils herkömmlich ausgebildet, so dass im Folgenden auf eine detaillierte Beschreibung des Lackierroboters 8 und des Rotationszerstäubers 9 verzichtet werden kann.

Die Überkopf-Montage des Lackierroboters 8 innerhalb der Lackierzelle 1 hat zum einen den Vorteil, dass der Lackierroboter 8 durch das sogenannte Overspray nur minimal verunreinigt wird, da das Overspray in der Lackierzelle 1 nach unten absinkt. Dadurch werden die Kosten für Wartung und Reinigung des Lackierroboters 8 verringert.

Zum anderen ist die Anordnung des Lackierroboters 8 im oberen Bereich der Lackierzelle 1 strömungstechnisch günstiger, was zu einer Erhöhung des Auftragswirkungsgrads und zu einer entsprechenden Verringerung des sogenannten Oversprays beiträgt.

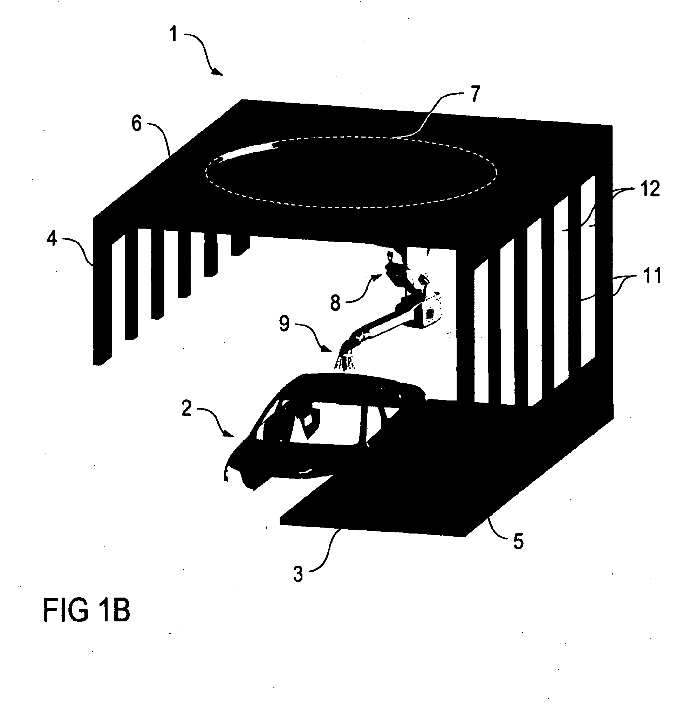

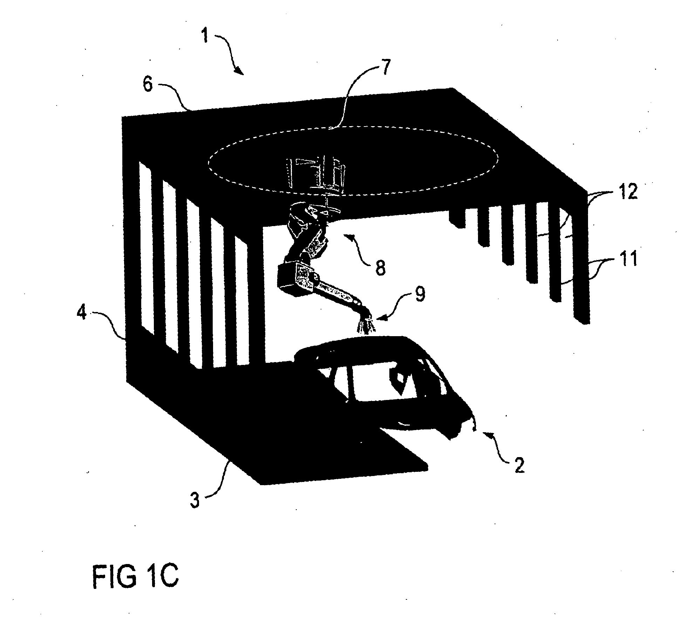

Der Lackierroboter 8 ist hierbei an der Decke 6 der Lackierzelle 1 nicht ortsfest angeordnet, sondern entlang der kreisförmigen Schienenanordnung 7 um eine Achse 10 drehbar, wie insbesondere aus den Figuren 1B und 1C ersichtlich ist. Der Lackierroboter 8 kann deshalb entlang der Schienenanordnung 7 zuerst auf eine Seite der Kraftfahrzeugkarosserie 2 gefahren werden, um diese Seite der Kraftfahrzeugkarosserie 2 zu beschichten. Anschließend kann der Lackierroboter 8 entlang der Schienenanordnung 7 auf die andere Seite der Kraftfahrzeugkarosserie 2 gefahren werden, um auch diese Seite der Kraftfahrzeugkarosserie 2 zu beschichten. Diese hochmobile Führung des Lackierroboters 8 innerhalb der Lackierzelle ermöglicht es, dass innerhalb der Lackierzelle 1 nur ein einziger Lackierroboter 8 angeordnet ist, der die Kraftfahrzeugkarosserie 2 von allen Seiten und auch von innen beschichten kann. Die damit verbundene Verringerung der Anzahl von Lackierrobotern 8 in der Lackierzelle 1 führt zu einer erheblichen Senkung der Kosten (z.B. für Bauteile, Instandhaltung, Lack, Spülmittel, etc.).

Weiterhin ist aus Figur 1A ersichtlich, dass der Lackierroboter 8 einen bestimmten Arbeitsraum AR aufweist, der hier nur schematisch und stark vereinfacht durch eine punktierte Linie dargestellt ist. In der Praxis hat der Arbeitsraum AR entsprechend der Konstruktion und der Geometrie des Lackierroboters 8 eine bauartbedingte andere Kontur.

Aus dieser Darstellung ist jedoch ersichtlich, dass die Kraftfahrzeugkarosserie 2 vollständig innerhalb des Arbeitsraums AR liegt, so dass der Lackierroboter 8 die gesamte Kraftfahrzeugkarosserie 2 auf beiden Seiten beschichten kann, ohne dass ein zusätzlicher Lackierroboter erforderlich ist.

Darüber hinaus ist aus Figur 1A ersichtlich, dass der Arbeitsraum AR des Lackierroboters 8 vollständig unterhalb der Befestigungsposition an der Decke 6 der Lackierzelle 1 liegt. Im Gegensatz zu der eingangs erwähnten bekannten Beschichtungsanlage gemäß WO 2004/037430 A1 ist deshalb im Lackierbetrieb nahezu der gesamte Arbeitsraum AR nutzbar.

Aus den Figuren 1B und 1C ist weiterhin ersichtlich, dass die Seitenwände 4, 5 der Lackierzelle jeweils aus senkrecht verlaufenden Streben 11 bestehen, wobei in die Zwischenräume zwischen den Streben 11 jeweils Sichtfenster 12 eingesetzt sind, was eine Sichtkontrolle des Lackierprozesses innerhalb der Lackierzelle 1 ermöglicht.

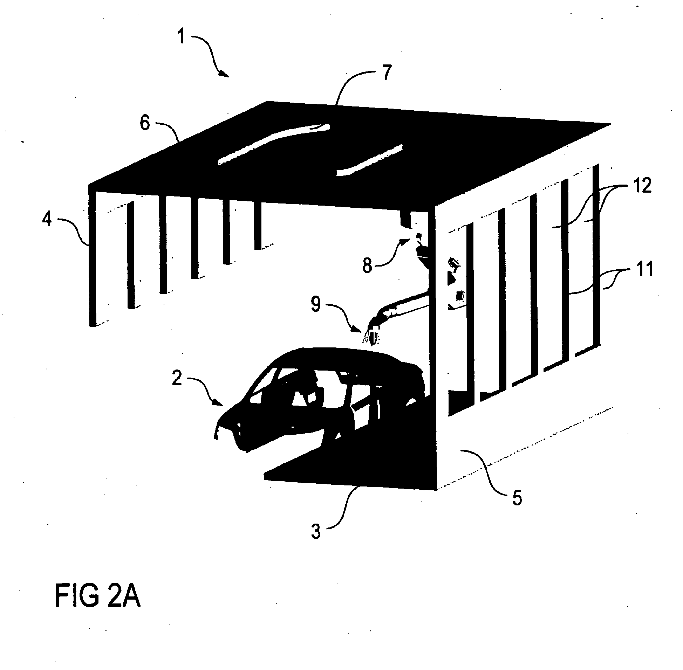

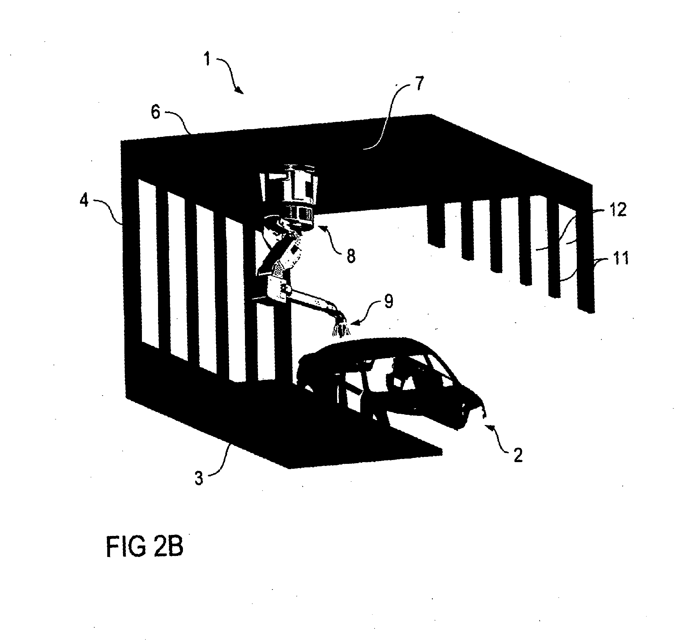

Die Figuren 2A und 2B zeigen ein alternatives Ausführungsbeispiel einer derartigen Lackierzelle 1, das weitgehend mit dem vorstehend beschriebenen und in den Figuren 1A bis 1C dargestellten Ausführungsbeispiel übereinstimmt. Zur Vermeidung von Wiederholungen wird deshalb im Folgenden weitgehend auf die Beschreibung zu den Figuren 1A bis 1C verwiesen, wobei für entsprechende Bauteile dieselben Bezugszeichen verwendet werden.

Eine Besonderheit dieses alternativen Ausführungsbeispiels besteht darin, dass die Schienenanordnung 7 an der Decke 6 der Lackierzelle 1 nicht kreisförmig, sondern oval ist. Diese formgebung der Schienenanordnung 7 ist sinnvoll, wenn Applikationsobjekte wie die Kraftfahrzeugkarosserie 2 lackierte werden sollen, die selber länglich sind.

### Bezugszeichenliste:

- 1: Lackierzelle
- 2: Kraftfahrzeugkarosserie
- 3: Boden
- 4: Seitenwand
- 5: Seitenwand
- 6: Decke
- 7: Schienenanordnung
- 8: Lackierroboter
- 9: Rotationszerstäuber
- 10: Achse
- 11: Streben
- 12: Sichtfenster
- 13: Lackierzelle
- 14: Kraftfahrzeugkarosserie
- 15: Boden
- 16: Decken
- 17-20: Seitenwandabschnitte
- 21: Fundament
- 22: Zwischenraum
- 23, 24: Seitenwände
- 25, 26: Tragbalken
- 27: Tragstruktur
- 28: Lackierroboter
- 29: Lackierroboter
- 30, 31: Rotationszerstäuber

## Patentansprüche

1. Beschichtungsanlage mit einem mehrachsigen Applikationsroboter (8) zur Applikation eines Beschichtungsmittels auf ein Applikationsobjekt (2) und mit einer mindestens teilweise hängenden Montage des Applikationsroboters (8), **dadurch gekennzeichnet,**
a) **dass** der Applikationsroboter (8) in einer im Wesentlichen waagerecht verlaufenden Decke einer Lackierzelle (1) hängend montiert ist, und
b) **dass** die Decke der Lackierzelle (1) als Filterdecke ausgebildet ist, durch die hindurch ein Luftstrom nach unten in die Lackierzelle (1) geleitet wird.

2. Beschichtungsanlage nach Anspruch 1, **gekennzeichnet durch** mindestens eine Lackierzelle (1), in der nur ein einziger Applikationsroboter (8) angeordnet ist.

3. Beschichtungsanlage nach Anspruch 2, **dadurch gekennzeichnet, dass** gegenüber liegende Seiten des Applikationsobjekts (2) von dem Applikationsroboter (8) für eine Applikation erreichbar sind.

4. Beschichtungsanlage nach einem der vorhergehenden Ansprüche, **dadurch gekennzeichnet, dass** außerhalb der Lackierzelle eine Tragstruktur angeordnet ist, die den Applikationsroboter (8, 28, 29) trägt, während die Decke (6) der Lackierzelle nicht-tragend ist, wobei sich in der Decke (6) der Lackierzelle ein Durchbruch befindet, durch den der Applikationsroboter in die Lackierzelle hineinragt.

5. Beschichtungsanlage nach einem der vorhergehenden Ansprüche, **gekennzeichnet durch** mindestens einen Verfahrweg (7), entlang dem der Applikationsroboter (8) verfahrbar ist.

6. Beschichtungsanlage nach Anspruch 5, **dadurch gekennzeichnet, dass** der Verfahrweg (7) ringförmig ist.

7. Beschichtungsanlage nach Anspruch 5, **dadurch gekennzeichnet, dass** der Verfahrweg (7) parallel zu dem Applikationsobjekt (2) und/oder quer zu dem Applikationsobjekt (2) verläuft.

8. Beschichtungsanlage nach einem der Ansprüche 5 bis 7, **gekennzeichnet durch** einen Lackierbereich, in dem das Beschichtungsmittel appliziert wird, wobei der Verfahrweg (7) außerhalb des Lackierbereichs angeordnet ist.

9. Beschichtungsanlage nach Anspruch 8, **dadurch gekennzeichnet, dass** der Verfahrweg (7) oberhalb des Lackierbereichs angeordnet ist.

10. Beschichtungsanlage nach einem der Ansprüche 5 bis 9, **dadurch gekennzeichnet, dass** der Verfahrweg (7) eine Schiene aufweist, die den Applikationsroboter (8) führt.

11. Beschichtungsanlage nach einem der Ansprüche 1 bis 4, **dadurch gekennzeichnet, dass** der Applikationsroboter ortsfest montiert ist.

12. Beschichtungsanlage nach einem der vorhergehenden Ansprüche, **gekennzeichnet durch** eine Lackierzelle mit einem Querschnitt, der sich nach oben hin verjüngt.

13. Beschichtungsanlage nach einem der vorhergehenden Ansprüche, **gekennzeichnet durch** eine Lackierzelle (1) mit einer nach innen gewölbten Decke.

14. Beschichtungsanlage nach einem der vorhergehenden Ansprüche, **dadurch gekennzeichnet, dass** der Applikationsroboter (8) zumindest in einer möglichen Position im Wesentlichen mittig über dem Applikationsobjekt (2) angeordnet ist.

15. Beschichtungsanlage nach einem der vorhergehenden Ansprüche, **gekennzeichnet durch** eine Lackierzelle (1) mit Seitenwänden (4, 5), die zumindest teilweise durchsichtig sind.

16. Verfahren zur Montage und/oder zum Betrieb eines mehrachsigen Applikationsroboters (8) in einer Beschichtungsanlage, wobei der Applikationsroboter (8) mindestens teilweise hängend montiert und/oder betrieben wird, **dadurch gekennzeichnet,**
a) **dass** der Applikationsroboter (8) in einer im Wesentlichen waagerecht verlaufenden Decke einer Lackierzelle (1) hängend montiert und/oder betrieben wird, und
b) **dass** durch die als Filterdecke ausgebildete Decke der Lackierzelle (1) hindurch ein Luftstrom nach unten in die Lackierzelle (1) geleitet wird..

17. Verfahren nach Anspruch 16, **dadurch gekennzeichnet, dass** derselbe Applikationsroboter (8) ein Applikationsobjekt (2) an gegenüber liegenden Seiten des Applikationsobjekts (2) mit einem Beschichtungsmittel beschichtet.

## Claims

1. A coating installation with a multi-axial application robot (8) for applying a coating medium to an object (2) and with an at least partially suspended mounting of the application robot (8), **characterised in that**
(a) the application robot (8) is mounted in a substantially horizontally extending ceiling of a painting booth (1), and
(b) that the ceiling of the painting booth (1) is constructed in the form of filtration ceiling through which an air current is conducted downwardly into the painting booth (1).

2. A coating installation as claimed in Claim 1, **characterised by** at least one painting booth (1) in which only a single application robot (8) is disposed.

3. A coating installation as claimed in Claim 2, **characterised in that** opposite sides of the object (2) are reachable by the application robot (8) for an application.

4. A coating installation as claimed in one of the preceding Claims, **characterised in that** arranged outside the painting booth there is a support structure, which carries the application robot (8, 28, 29), whilst the ceiling (6) of the painting booth is non-supporting, whereby an opening is situated in the ceiling (6) of the painting booth, through which the application robot extends into the painting booth.

5. A coating installation as claimed in one of the preceding Claims,
**characterised by** at least displacement path (7), along which the application robot can be moved.

6. A coating installation as claimed in Claim 5, **characterised in that** the displacement path (7) is of annular shape.

7. A coating installation as claimed in Claim 5, **characterised in that** the displacement path (7) extends parallel to the object (2) and/or transversely to the object (2).

8. A coating installation as claimed in one of Claim 5 to 7, **characterised by** a painting region, in which the coating agent is applied, whereby the displacement path (7) is disposed outside the painting region.

9. A coating installation as claimed in Claim 8, **characterised in that** the displacement path (7) is disposed above the painting region.

10. A coating installation as claimed in one of Claims 5 to 9, **characterised in that** the displacement path (7) includes a track, which guides the application robot (8).

11. A coating installation as claimed in one of Claim 1 to 4, **characterised in that** the application robot is fixedly mounted in position.

12. A coating installation as claimed in one of the preceding Claims, **characterised by** a painting booth with a cross-section, which tapers upwardly.

13. A coating installation as claimed in one of the preceding Claims, **characterised by** a painting booth (1) with an inwardly curved ceiling.

14. A coating installation as claimed in one of the preceding Claims, **characterised in that** the application robot (8) is arranged, at least in one possible position, substantially centrally above the object (2).

15. A coating installation as claimed in one of the preceding Claims, **characterised by** a painting booth (1) with side walls (4, 5), which are at least partially transparent.

16. A method of mounting and/or operating a multi-axial application robot (8) in a coating installation, wherein the application robot (8) is mounted and/or operated at least partially suspended, **characterised in that**
(a) the application robot (8) is mounted and/or operated suspended in a substantially horizontal extending ceiling of a painting booth (1), and
(b) that an air current is conducted downwardly into the painting booth (1) through the ceiling of the painting booth, which is constructed as a filtration ceiling.

17. A method is claimed in Claim 16, **characterised in that** the same application robot (8) coats an object (2) on opposite sides of the object (2) with a coating agent.

## Revendications

1. Installation de revêtement comprenant un robot d'application à plusieurs axes (8) pour l'application d'un agent de revêtement sur un objet à revêtir (2), et un montage au moins partiellement suspendu du robot d'application (8),
**caractérisée en ce que**
a) le robot d'application (8) est monté en suspension sur un plafond s'étendant essentiellement horizontalent d'une cabine de peinture (1),
b) le plafond de la cabine de peinture (1), est configuré en plafond filtrant à travers lequel un flux d'air est guidé vers le bas dans dans la cabine de peinture (1).

2. Installation de revêtement selon la revendication 1, **caractérisée par** au moins une cabine de peinture où un seul robot d'application est présent.

3. Installation de revêtement selon la revendication 2, **caractérisée en ce que** des côtés opposés de l'objet à revêtir (2) peuvent être atteints par le robot d'application (8) pour une application.

4. Installation de revêtement selon l'une des revendications précédentes, **caractérisée en ce qu'**une structure porteuse est disposée à l'extérieur de la cabine de peinture, qui supporte le robot d'application (8, 28, 29), tandis que le plafond (6) de la cabine de peinture n'est pas porteur, une traversée étant aménagée dans le plafond (6) de la cabine de peinture à travers laquelle le robot d'application pénètre dans la cabine de peinture.

5. Installation de revêtement selon l'une des revendications précédentes, **caractérisée par** au moins un chemin de déplacement (7) sur lequel le robot d'application (8) est déplaçable.

6. Installation de revêtement selon la revendication 5, **caractérisée en ce que** le chemin de déplacement (7) est annulaire

7. Installation de revêtement selon la revendication 5, **caractérisée en ce que** le chemin de déplacement (7) s'étend parallèlement à l'objet à revêtir et/ou transversalement à l'objet à revêtir (2).

8. Installation de revêtement selon l'une des revendications 5 à 7, **caractérisée par** une zone de peinture où l'agent de revêtement est appliqué, le chemin de déplacement étant extérieur à la zone de peinture.

9. Installation de revêtement selon la revendication 8, **caractérisée en ce que** le chemin de déplacement est disposé au-dessus de la zone de peinture.

10. Installation de revêtement selon l'une des revendications 5 à 9, **caractérisée en ce que** le chemin de déplacement présente un rail guidant le robot d'application (8).

11. Installation de revêtement selon l'une des revendications 1 à 4, **caractérisée en ce que** le robot d'application est monté à un emplacement fixe.

12. Installation de revêtement selon l'une des revendications précédentes, **caractérisée par** une cabine de peinture dont la section transversale diminue de bas en haut.

13. Installation de revêtement selon l'une des revendications précédentes, **caractérisée par** une cabine de peinture (1) avec un plafond bombé vers l'intérieur.

14. Installation de revêtement selon l'une des revendications précédentes, **caractérisée en ce que** le robot d'application (8) est disposé, du moins dans une position possible, essentiellement au centre sur l'objet à revêtir (2).

15. Installation de revêtement selon l'une des revendications précédentes, **caractérisée par** une cabine de peinture (1) avec des parois latérales (4, 5) au moins partiellement transparentes.

16. de montage et/ou d'entrainement d'un robot d'application (8) à plusieurs axes dans une installation de revêtement, le robot d'application (8) étant monté et/ou entrainé au moins partiellement suspendu, **caractérisé en ce que**
a) le robot d'application (8) est monté et/ou entrainé en suspension sur un plafond s'étendant essentiellement horizontalent d'une cabine de peinture (1), et
b) un flux d'air est guidé vers le bas dans dans la cabine de peinture (1) à travers le plafond de la cabine de peinture (1) configuré en plafond filtrant.

17. Procédé selon la revendication 16, **caractérisé en ce que** le même robot d'application (8) procède au revêtement d'un objet à revêtir (2) sur les faces opposées de l'objet à revêtir (2) au moyen d'un produit de revêtement.
